# EUROPÄISCHE PATENTSCHRIFT

(11) **EP 2 548 714 B1**
(45) Veröffentlichungstag und Bekanntmachung des Hinweises auf die Patenterteilung: **11.09.2013**
(21) Anmeldenummer: 11174853.9
(22) Anmeldetag: 21.07.2011
(51) Int. Cl.: B29C 65/16

(54) **Laserstrahl-Schweissverfahren und daraus hergestellte Formteile**
Laser welding method and parts made thereby
Procédé de soudure laser et pièces ainsi fabriquées

(43) Veröffentlichungstag der Anmeldung: 23.01.2013
(73) Patentinhaber: EMS-Patent AG, 7013 Domat/Ems (CH)
(72) Erfinder: Butzke, Jens, 7013 Domat/Ems (CH); Würthner, Stefan, 7013 Domat / Ems (CH); Lamberts, Nikolai, 7402 Bonaduz (CH); Dübon, Pierre, 7000 Chur (CH); Bertram, Sabine, 7013 Domat / Ems (CH); Caviezel, Heinz, 7425 Masein (CH)
(74) Vertreter: Bremi, Tobias Hans

(56) Entgegenhaltungen:
- US-B2- 7 588 658
- anonymous: "Innovations in Laser Welding of Thermoplastics: This Advanced Technology is Ready to be Commercialized", , 2002, Seiten 1-20, XP002665865, Gefunden im Internet: URL:http://www2.basf.us//PLASTICSWEB/displ ayanyfile?id=0901a5e180004897 [gefunden am 2011-12-15]
- Sibylle Glaser: "Colorants and Special Additives for Laser Welding", , 2006, Seiten 1-5, XP002665866, Gefunden im Internet: URL:http://treffert.k0v.de/treffert/treffe rt/img/Joining%20plastics.pdf [gefunden am 2011-12-15]

## Beschreibung

### TECHNISCHES GEBIET

Die vorliegende Erfindung betrifft ein Verfahren zum Laserstrahlschweissen von thermoplastischen Bauteilen, insbesondere von weisspigmentierten Bauteilen. Zudem betrifft sie im Wesentlichen weisse Gegenstände, welche durch derartiges Laserstrahlschweissen von thermoplastischen Formteilen zusammengefügt wurden.

### STAND DER TECHNIK

Das Laserstrahlschweissen bietet gegenüber anderen Verbundtechniken für Kunststoffe eine Reihe von Vorteilen, wie beispielsweise geringe mechanische und örtlich begrenzte thermische Belastung der zu fügenden Formteile und hohe Anpassungsfähigkeit bezüglich der Schweissnahtgeometrie. Prinzipiell muss das dem Laser zugewandte Formteil für die Laserstrahlung durchlässig sein, während das andere Formteil diese Strahlung mit geringer Eindringtiefe nahe der Oberfläche absorbieren und am Ort der eingebrachten Strahlung aufschmelzen muss. Durch Wärmeübertragung schmilzt dann an der Kontaktfläche auch das für die Strahlung durchlässige Formteil und nach dem Erkalten entsteht ein fester, stoffschlüssiger Verbund.

Im Stand der Technik findet sich eine Reihe von Beispielen für das Laserstrahlschweissen von Kunststoffformteilen in verschiedenen Farbkombinationen. Aus dem Artikel "Laser-Kunststoffschweissen in allen Farben" von Böhm et al., der 2004 in Ausgabe 23 der "Technischen Rundschau" (Swiss Professional Media AG, Wabern, Schweiz) erschien, ist bekannt, dass sich aufgrund der hervorragenden Absorptionseigenschaften von Russ, als geläufigem schwarzem Farbpigment, die Formteilkombination transparent/schwarz am besten zum Laserstrahlschweissen eignet. In diesem Artikel wurden darüber hinaus Additive mit hoher NIR-Absorptionsfähigkeit vorgestellt, die auf Grund ihrer geringen Eigenfarbe zur Verwendung mit transparenten Farbtönen geeignet sind. So ist aus dem Stand der Technik der Zusatz von NIR-Absorptionsverstärkern in Polymerzusammensetzungen bekannt. In der US-A-2009/0130451 wird z.B. eine spezielle laserstrahlschweissbare Polymerzusammensetzung präsentiert, die z.B. Lanthanhexaborid oder Cäsium-Wolframoxid als NIR-Absorptionsverstärker enthält. Es wird explizit darauf hingewiesen, dass ohne Zusatz dieser im NIR absorbierenden Additive keine laserstrahlverschweissbare Zusammensetzung, auch in Anwesenheit von Pigmenten, erhalten werden kann. In wie weit der Weissgrad bei der weissen Einfärbung durch das Additiv beeinflusst wird, geht aus dem Dokument nicht hervor.

Neben den hohen Kosten für die beschriebenen Additive ist auch der mit ihrem Einsatz verbundene technische Aufwand von Nachteil. Des Weiteren wird der Weisseindruck durch die Eigenfarbe der Additive negativ beeinflusst.

Die WO-A-02/055287 offenbart ein spezielles Laserstrahlschweissverfahren von Kunststoffen, welches ein weiteres Formteil zwischen den beiden zu verbindenden Formteilen vorsieht. Dieses zusätzliche Formteil enthält eine Schicht mit absorbierenden Zusätzen und wird durch die Laserstrahlung zumindest teilweise aufgeschmolzen. Nach dem Erkalten der Schmelze entsteht ein Verbund zwischen den zu verbindendenden Formteilen.

Die US-A-2010/0301022 offenbart ein Verfahren, in dem zunächst ein laserabsorbierender Farbstoff auf ein erstes Substrat aufgebracht wird. Nach in Kontakt bringen des ersten Substrats mit einem zweiten Substrat können diese Substrate auf Grund der absorbierenden Eigenschaften des aufgebrachten Farbstoffs durch Laserstrahlschweissen miteinander verbunden werden.

Die für den Konsumenten nicht minder interessante Farbkombination weiss/weiss stellt eine besondere Herausforderung dar. Der hohe Brechungsindex von Weisspigmenten wie z.B. Titandioxid verursacht eine hohe Streuung des Laserlichts. Folglich kann, wenn überhaupt, nur ein geringer Teil der eingebrachten Strahlung in die zum Aufschmelzen des absorbierenden Fügepartners benötigte Wärmeenergie umgewandelt werden. Aus den genannten Gründen weist die WO-A-2009/000252 darauf hin, dass Titandioxid als Weissmittel grundsätzlich zur Anwendung in laserbasierten Fügeverfahren nicht geeignet ist.

Tatsächlich ist es so, dass Bauteile mit einer Weisspigmentierung, die auch wirklich als optisch weiß empfunden wird, bei Verwendung der üblichen Lasertechnologie für das Laserschweißen in der Praxis nicht genügend durchlässig sind. Bei der verwendeten LaserWellenlänge von 980 nm führt diese ungenügende Durchlässigkeit derartiger Bauteile dazu, dass das Laserlicht überhaupt nicht durch das obenliegende Bauteil hindurchdringt und bis zur Fügestelle gelangen kann, und es führt in der Regel dazu, dass das Laserlicht oberflächlich auf dem obenliegenden Bauteil umgewandelt wird und dort zu einem die Oberfläche verändernden Aufschmelzen und häufig sogar zu einer Schwarzfärbung, d.h. zu einem Abbau des Polymermaterials, führt.

### DARSTELLUNG DER ERFINDUNG

Es ist u.a. Aufgabe der vorliegenden Erfindung, ein Verfahren zum Laserstrahlschweissen von thermoplastischen Bauteilen, namentlich von weisspigmentierten Bauteilen, zur Verfügung zu stellen.

Konkret wird ein Verfahren zum Laserverschweißen von zwei wenigstens im Verbindungsbereich in Kontakt gebrachten Kunststoffbauteilen, in der Folge als Bauteil A und Bauteil B bezeichnet, wobei das Bauteil A dem Laserstrahl zugewandt ist und von diesem beim Schweißprozess durchdrungen wird, und das Bauteil B dem Laserstrahl abgewandt ist, vorgeschlagen.

Dabei besteht das der Lasereinstrahlung abgewandte Bauteil (B) aus einer Kunststoffmatrix mit einer Weisspigmentierung von wenigstens 0.5 Gewichtsprozent, vorzugsweise wenigstens 1.5 Gewichtsprozent, bevorzugt wenigstens 3.5 Gewichtsprozent und noch mehr bevorzugt wenigstens 5 Gewichtsprozent und höchstens 20 Gewichtsprozent, vorzugsweise höchstens 15 % Gewichtsprozent, und das der Laserstrahlung zugewandte Bauteil (A), durch welches beim Verschweißen der Laserstrahl hindurchtritt, weist eine Kunststoffmatrix mit einer Weisspigmentierung auf. Erfindungsgemäß wird dabei für das Verschweißen eine Laserwellenlänge im Bereich von 1200 - 2200 nm eingesetzt. Bevorzugt wird im Wellenlängenbereich von 1400 bis 2000 nm und besonders bevorzugt bei 1440 bis 1500 nm und am meisten bevorzugt bei 1440-1500 nm oder 1910 - 1970 nm gearbeitet. Im Gegensatz zu den Verfahren nach dem Stand der Technik, wo für derartige Prozesse eine Wellenlänge von normalerweise 980 nm eingesetzt wird, zeigt es sich, dass bei den höheren Wellenlängen unerwarteterweise der Schweißprozess selbst bei einer Weisspigmentierung des Bauteils (B) erfolgreich möglich ist. Man würde an sich erwarten, dass Bauteil (B), selbst wenn das Bauteil (A) aus einem unpigmentierten Werkstoff besteht, durch die Weisspigmentierung unter Laserstrahleinwirkung oberflächlich beschädigt wird und nicht dass ein für eine Schweißverbindung genügendes Aufschmelzen gewährleistet ist. Ebenso unerwartet ist es, dass selbst wenn das Bauteil (A) pigmentiert ist, der Prozess durchgeführt werden kann. Der Prozess muss dabei unter folgenden, gleichzeitig zu erfüllenden Bedingungen respektive Maßgaben geführt werden:
1) die Weglänge (1) des Laserstrahls durch das zugewandte Bauteil (A) darf höchstens 1 mm betragen.
2) bei einer Weisspigmentierung des Bauteils (A) ausgedrückt in Gewichtsprozent muss das Produkt aus Weglänge (1) des Laserstrahls durch das zugewandte Bauteil (A) in mm und Weisspigmentierung in Gewichtsprozent kleiner als 1.25 sein.

Mit anderen Worten kann selbst wenn das der Laserstrahlung zugewandte Bauteil (A) pigmentiert ist, der Prozess erfolgreich geführt werden. Bedingung ist dann aber, dass die Pigmentierung des der Laserstrahlung zugewandten Bauteils (A) gezielt etwas niedriger als üblich eingestellt wird, bevorzugtermassen aber immer noch so, dass eine optisch weiße Erscheinung gewährleistet ist. Dies ist typischerweise der Fall, wenn die Weisspigmentierung des der Laserstrahlung zugewandten Bauteils (A) in Gewichtsprozent wenigstens 0.05 %, vorzugsweise wenigstens 0.5 % beträgt. Durch hohe Pigmentierung von Bauteil (B) wird durch den Kontrast auch der Weisseindruck von Bauteil (A) erhöht. Zudem ist Bedingung, dass der Weg des Lasers durch das dem Laser zugewandte Bauteil (A) nicht zu lang ist, d.h. dieser Weg darf nicht länger als 1 mm sein und das oben definierte Produkt muss < 1.25, vorzugsweise kleiner < 1.00, und am meisten bevorzugt kleiner < 0.65, sein. Überraschenderweise zeigt es sich, dass dann zwar eine optisch genügende Weiss-Wirkung erzeugt wird, trotzdem aber nicht ein oberflächlicher Schaden am Bauteil (A) durch den Laser erzeugt wird und der Laser genügend durch das Bauteil (A) hindurchtritt und auf der Schweißstelle eine genügende Erwärmung zum Aufschmelzen und zur Bildung der qualitativ hoch stehenden Fügestelle gewährleistet ist.

Wenn in dieser Schrift von einer Weisspigmentierung in Gewichtsprozent gesprochen wird, so ist darunter stets der prozentuale Gewichtsanteil bezogen auf die Gesamtmasse, welche in Summe 100 Gewichtsprozente ergibt, des Bauteils respektive des betroffenen Bereichs des Bauteils zu verstehen. Das Bauteil (A), aber auch das Bauteil (B) kann bereichsweise aus unterschiedlichen Materialien aufgebaut sein, wenn in der Folge von Bauteil (A) respektive Bauteil (B) die Rede ist und dieses definiert wird, so bezieht sich dies wenigstens auf jenen Bereich des jeweiligen Gesamtbauteils, der vom Laser-Fügeprozess betroffen ist.

Wenn das Bauteil (A) eine Weisspigmentierung aufweist, so ist das Produkt aus Weglänge (1) in mm und Weisspigmentierung in Gewichtsprozent bevorzugtermassen kleiner als 1, bevorzugt kleiner < 0.65, oder im Bereich von 0.2-0.8, bevorzugt im Bereich 0.2 bis 0.6, insbesondere bevorzugt im Bereich 0.2 bis 0.5.

Eine weitere bevorzugte Ausführungsform des Verfahrens ist dadurch gekennzeichnet, dass Bauteil (A) und/oder Bauteil (B) frei von im NIR-Bereich laserabsorbierenden Additiven sind, und dass auch zwischen den Bauteilen keine separate Schichten oder Beschichtungen mit derartigem Material angeordnet sind. Bevorzugtermassen liegen Bauteil (A) und Bauteil (B) an der Fügestelle direkt aufeinander. Insbesondere bevorzugt sind sowohl Bauteil (A) als auch Bauteil (B) im Wesentlichen frei, vorzugsweise vollständig frei von im NIR-Bereich laserabsorbierenden Additiven.

Eine weitere bevorzugte Ausführungsform des Verfahrens ist dadurch gekennzeichnet, dass bei der Führung des Verfahrens der Laserstrahl auf die Schweissnaht fokussiert ist. Der Laserstrahl wird also vorzugsweise in der Ebene der Fügestelle fokussiert, um dort die höchste Eintragsleistung pro Volumeneinheit zu gewährleisten.

Generell wird bevorzugt, eine Laserleistung im Bereich von 2-500 W, und insbesondere bevorzugt von 5-200 W, einzusetzen. Weiterhin generell wird bevorzugt mit einer Vorschubgeschwindigkeit im Bereich von 100-7000 mm/min gearbeitet. Insbesondere bevorzugt wird eine Streckenenergie im Bereich von 0.0005 bis 0.05 J/mm, bevorzugt 0.0007 bis 0.04 J/mm und besonders bevorzugt von 0.0009 bis 0.01 J/mm eingesetzt. Die Streckenenergie ergibt sich aus dem Quotienten aus Laserleistung in W und dem Vorschub in mm/min und der Multiplikation des sich durch die Umrechnung der physikalischen Einheiten bedingten Korrekturfaktors (60).

Während des Prozesses werden bevorzugtermassen die Bauteile mit einem Anpressdruck im Bereich von 1-10 bar, vorzugsweise im Bereich von 2-5 bar aneinandergepresst.

Wie oben beschrieben ist das unten liegende, d.h. dem Laser abgewandte Bauteil (B) mit einer Weisspigmentierung versehen. Vorzugsweise liegt diese im Bereich von wenigstens 3.5 Gewichtsprozenten, vorzugsweise von wenigstens 5 Gewichtsprozenten und normalerweise höchstens bei 20 Gewichtsprozenten, vorzugsweise höchstens bei 15 Gewichtsprozenten.

Die Bauteile sind vorzugsweise beide weiß, auf jeden Fall aber das dem Laser abgewandte Bauteil (B). Darunter ist zu verstehen, dass Bauteil (B) und wenn gegeben auch Bauteil (A), respektive eine entsprechende Formmasse wenn zu einem Formteil mit glatter Oberfläche verarbeitet, eine Farbwirkung im LAB-System aufweisen, welche tatsächlich eine weiße Farberscheinung darstellt. Dies heißt, dass bevorzugtermassen L* > 80, vorzugsweise L* > 90, insbesondere vorzugsweise L* > 95 ist. Bevorzugtermassen ist alternativ oder zusätzlich der Betrag von a* respektive unabhängig davon Betrag von b* jeweils < 10, vorzugsweise < 5, insbesondere vorzugsweise < 3 ganz besonders bevorzugt im Bereich von 0. Für die Bauteile sind L*-Werte von > 96 besonders bevorzugt. Hinsichtlich des abgewandten Bauteils (B) gilt bevorzugt, dass es, wenn zu einem Formteil mit glatter Oberfläche verarbeitet, eine Farbwirkung im LAB-System aufweist, bei welcher L* > 90, vorzugsweise L* > 95 insbesondere vorzugsweise L* > 96 ist.

Im Wesentlichen erlaubt also das vorgeschlagene Verfahren die Realisierung folgender Vorteile:
- Die verschweißten Gegenstände, wenigstens der aus Bauteil (B) eingebrachte Teil des Gegenstands, sind weiß;
- Der Zusatz von NIR-Absorptionsverstärkern in die thermoplastischen Formmassen oder das Vorlegen oder Aufbringen von Absorptionsverstärkern an der Verbundstelle ist nicht notwendig und es muss kein weiteres Bauteil, welches einen

Absorptionsverstärker enthält, eingebracht werden.

Die Bauteile respektive Formmassen zur Verwendung im Verfahren gemäss der vorliegenden Erfindung können die dem Fachmann bekannten thermoplastischen, Polymere als Polymermatrix enthalten oder im wesentlichen bis auf die genannte Weisspigmentierung und die üblichen Zusätze wie beispielsweise Flammschutzmittel, Zusätze zur Verbesserung der mechanischen Stabilität und nicht im IR-absorbierenden Additiven aus Polymeren bestehen. Als nicht limitierende Beispiele sollen Acetalharze; liquid crystal polymers, Polyacrylate, Polymethacrylate; olefinische und cycloolefinische Polymere; Polyamide; Polyamidelastomere, insbesondere Polyesteramide, Polyetheramide und Polyetheresteramide, Polyamidimide, Polyarylether beeinhaltend Polyphenylether; Polycarbonate; Polyethersulfone; Polyetherimide, Polyimide, Polyester; Polyester-Polycarbonate; Polyether; Polyoxyethylene; Polystyrol; Polysulfone; vinylische Polymere wie Polyvinylchlorid und Polyvinylacetat; oder Mischungen aus einem oder mehreren der aufgezählten Materialien, beinhaltend ABS, MBS und SAN, PC, PMMA etc. genannt werden.

Eine bevorzugte Ausführungsform stellen die transparenten, vorzugsweise amorphen Polymere dar. Der Begriff transparente thermoplastische Polymere respektive transparente Kunststoffmatrix, insbesondere Polyamide (das heisst transparentes Homopolyamid und/oder Copolyamid), wie er in dieser Schrift verwendet wird, soll Polymere respektive Kunststoffmatrix-Systeme, insbesondere Polyamide oder Copolyamide respektive daraus gebildete Formmassen bezeichnen, deren Lichttransmission wenigstens 80%, insbesondere bevorzugt wenigstens 90% beträgt, wenn das Polymer respektive (Co)Polyamid (in reiner Form, d.h. ohne die oben angegebenen weiteren Bestandteile der Formmasse) in Form eines Plättchens von 2 mm Dicke vorliegt.

Der Wert der Lichttransmission ist dabei im Rahmen dieses Textes stets als bestimmt nach der Methode ASTM D1003 (Lichtart CIE-C) zu verstehen. Die Messung der Lichttransmission wurde dabei in den unten angeführten Experimenten auf einem Gerät mit dem Namen Haze Guard Plus der Firma BYK Gardner (DE) an Rundplatten 70x2 mm durchgeführt. Der Transmissionswert wird für den sichtbaren Wellenlängenbereich definiert nach CIE-C d.h. mit wesentlichen Intensitäten ca. zwischen 400 und 770 nm, angegeben. Die Rundplatten 70x2 mm werden z.B. dafür auf einer Arburg Spritzgussmaschine im polierten Werkzeug hergestellt, wobei die Zylindertemperatur zwischen 200 und 340 °C und die Werkzeugtemperatur zwischen 20 und 140 °C liegt. Bevorzugtermassen beträgt die Trübung (Haze) einer aus der Formmasse hergestellten Platte einer Dicke von 2 mm höchstens 5 % (gemessen nach ASTM D 1003 wie oben angegeben).

Eine weitere bevorzugte Ausführungsform sind teilkristalline Polymere, die ebenfalls erfolgreich nach dem Verfahren der vorliegenden Erfindung verschweisst werden können. Diese müssen dabei nicht transparent im obigen Sinne sein, können es aber.

In einer bevorzugten Ausführungsform enthalten die erfindungsgemäss eingesetzten Bauteile respektive Formteile Polyamide oder Mischungen daraus, oder sie bestehen bevorzugt aus solchen Polyamiden als Kunststoffmatrix. Diese Polyamide werden dabei bevorzugt aus aliphatischen beinhaltend cycloaliphatische Diaminen und aromatischen oder aliphatischen Dicarbonsäuren oder aus Lactamen erhalten. Besonders bevorzugt werden Homo- und Co-Polyamide gebildet aus cycloaliphatischen C6-C17-Diaminen und/oder aliphatischen C4-C12-Diaminen mit aliphatischen C4-C20-Dicarbonsäuren und/oder aromatischen Dicarbonsäuren verwendet.

Spezielle nicht limitierende Beispiele für die Dicarbonsäuren sind Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, 1,4-Cyclohexandicarbonsäure, Eicosandisäure, Naphthalindicarbonsäure, Terephthalsäure und Isophtalsäure.

Bevorzugt sind alternativ auch Polyamide, die gebildet sind aus den vorgenannten Diaminen und Dicarbonsäuren sowie Lactamen mit 4 bis 15 C-Atomen und/oder α,ω-Aminosäuren mit 4 bis 15 C-Atomen.

Spezielle nicht limitierende Beispiele für die Diamine sind Hexamethylendiamin, Heptamethylendiamin, Octamethylendiamin, Nonamethylendiamin, Decamethylendiamin, Undecanmethylendiamin, Dodecamethylendiamin, Trimethylhexamethylendiamin, 2-Methyl-1,5-pentandiamin, Isophorondiamin, Norbornandiamin, 1,3-Bis(aminomethyl)cyclohexan, MACM, MXD, PACM, PXD und TMACM.

MACM steht für 3,3'-Dimethyl-4,4'-diaminocyclohexylmethan, MXD steht für meta-Xylylendiamin, PACM steht für 4,4'-Diaminocyclohexylmethan, PXD steht für para-Xylylendiamin und TMACM steht für 3,3',5,5'-Tetramethyl-4,4'-diaminocyclohexylmethan.

In einer weiteren bevorzugten Ausführungsform enthalten die erfindungsgemässen Bauteile ein transparentes, amorphes Polyamid aus MXD und Terephthalsäure, oder MXD und Isophtalsäure.

Bevorzugte transparente Polyamide, die Bestandteil der Kunststoffmatrix sind oder diese im wesentlichen ausschliesslich (bis auf die üblichen Additive in geringen Anteilen und ggf. vorhandene Glasfasern) bilden, sind ausgewählt aus der Gruppe: MACM9-18, PACM9-18, MACMI/12, MACMI/MACMT, MACMI/MACMT/12, 6I6T/MACMI/MACMT/12, 3-6T, 6I6T, TMDT, 6I/MACMI/MACMT, 6I/PACMI/PACMT, 6I/6T/MACMI, MACMI/MACM36, 6I, 12/PACMI, MXDI/6I oder 12/MACMT, 6/PACMT, 6/6I, 6/IPDT oder Mischungen daraus, wobei 50 mol.-% der IPS durch TPS ersetzt sein kann.

In einer anderen bevorzugten Ausführungsform enthalten die erfindungsgemässen Bauteile ein teilkristallines Polyamid oder bestehen als Kunststoffmatrix aus einem solchen. Nicht limitierende Beispiele sind PA6, PA66, PA69, PA610, PA11, PA12, PA1010, PA1012, PA1210, PA1212.

In einer weiterhin bevorzugten Ausführungsform enthalten die erfindungsgemässen Bauteile ein transparentes, amorphes Polyamid aus 3,3'-Dimethyl-4,4'-diaminodicyclohexylmethan und Decandisäure und/oder Dodecandisäure, wobei Decandisäure und/oder Dodecandisäure durch bis zu 20 % aromatischer Dicarbonsäuren ersetzt sein können.

In einer weiteren bevorzugten Ausführungsform enthalten die erfindungsgemässen Bauteile ein transparentes, amorphes Polyamid aus MACM und Dodecandisäure (MACM 12), wobei Dodecandisäure durch bis zu 20 % aromatischer Dicarbonsäuren ersetzt sein kann.

In der am meisten bevorzugten Ausführungsform enthalten die erfindungsgemässen Bauteile oder bestehen als Kunststoffmatrix (bis auf die üblichen Additive in geringen Anteilen und ggf. vorhandene Glasfasern) aus einem transparenten, amorphen Polyamid aus 3,3'-Dimethyl-4,4'-diaminodicyclohexylmethan und Dodecandisäure.

Die Bauteile gemäss der vorliegenden Erfindung enthalten des Weiteren zumindest ein weisses, im Wesentlichen nicht im NIR absorbierendes Pigment, wie zum Beispiel Aluminiumoxid (Al₂O₃); Bariumsulfat (BaSO₄); Bleicarbonat (PbCO₃); Calciumcarbonat (CaCO₃); Magnesiumcarbonat (MgCO₃); Titandioxid (TiO₂); Titanate wie z.B. Bariumtitanat (BaTiO₃), Zinkoxid (ZnO); Zinksulfid (ZnS); Glimmer; Kreide; Lithopone; Siliziumdioxid; Silikate wie beispielsweise Aluminiumsilikat oder Natriumsilikat; Talk; metalldotierte oder beschichtete Varianten der genannten Materialien oder Kombinationen die zumindest eines der genannten Materialien beinhalten. Die vorhergehende Aufzählung ist nicht limitierend.

In einer bevorzugten Ausführungsform ist das weisse Pigment Titandioxid in der Rutil- oder Anatas-Form, Zinksulfid oder Kreide. In einer besonders bevorzugten Ausführungsform ist das weisse Pigment Titandioxid in der Rutil-Form. Spuren (d.h. typischerweise <0.2 Gew.-% oder < 0.1 Gew.-%) von anderen Farbmitteln, die nicht im NIR absorbieren, können in gewissen Ausführungsformen enthalten sein, um den Farbton einzustellen.

In einer Ausführungsform hat das weisse Pigment eine mittlere Partikelgrösse von 0.1 bis 0.5 Mikrometer (median particle size). In einer anderen Ausführungsform ist das weisse Pigment Titandioxid in der Rutil-Form mit einer mittleren Partikelgrösse von 0.15 bis 0.30 Mikrometer. In einer bevorzugten Ausführungsform ist das weisse Pigment Titandioxid in der Rutilmodifikation mit einer mittleren Partikelgrösse von 0.20 bis 0.26 Mikrometer (median particle size).

Bauteil A ist für die Laserstrahlung wenigstens teilweise transmissiv. Es hat beispielsweise eine Dicke von 0.1 bis 5 mm, vorzugsweise von 0.2 bis 1 mm, insbesondere bevorzugt im Bereich von 0.2 bis 0.5 mm, ganz besonders bevorzugt im Bereich von 0.2 bis 0.4 mm. Bauteil B ist der Laserstrahlung abgewandt und kann diese wenigstens teilweise absorbieren. Bauteil B hat beispielsweise eine Dicke von 0.5 bis 10 mm, vorzugsweise von 1 bis 4 mm.

Beim Schweissvorgang dringt die Laserstrahlung zunächst wenigstens teilweise durch Bauteil A und wird dann wesentlich in Bauteil B in der Nähe der Oberfläche absorbiert und in Wärme umgewandelt. Bauteil B schmilzt am Ort der Absorption und durch die übertragene Kontaktwärme wird auch Bauteil A an der Grenzfläche geschmolzen. Während des Schweissvorgangs wird vorzugsweise ein äusserer Anpressdruck angelegt. Spätestens nach dem Erkalten entsteht ein fester Verbund.

Die Schweissnaht kann dabei eine Gerade bilden, kann aber auch eine beliebige Form aufweisen, sie kann in einem Bereich angeordnet sein, wo die beiden Bauteile (A) und (B) flächig aneinandergrenzen, sie kann aber auch in einem Bereich angeordnet sein, wo beispielsweise ein Vorsprung oder eine Rippe des einen Bauteils auf eine Fläche des anderen Bauteils zu liegen kommt, oder in einem Bereich, wo zwei korrespondierend angeordnete Vorsprünge respektive Rippen oder auch Nut und Kamm der beiden Bauteile aneinandergrenzen. Die Schweissnaht kann also sowohl eine punktuelle Schweissnaht sein, als auch eine lang gezogene Schweissnaht. Eine punktuelle Schweissnaht kann z.B. durch einen gepulsten Laser erzeugt werden.

Der Laserstrahl kann senkrecht oder unter einem von null verschiedenen Winkel zur Ebenennormalen der Oberfläche des Bauteils A gerichtet eingesetzt werden.

Die Bauteile gemäss der vorliegenden Erfindung können andere dem Fachmann bekannte Additive beinhalten, welche die Eigenschaften der Formteile, insbesondere hinsichtlich der Wechselwirkung mit der eingesetzten Wellenlänge des Laserstrahls, nicht nachteilig beeinflussen. Das Additiv ist vorzugsweise ausgewählt aus der Gruppe bestehend aus anorganischen Stabilisatoren, organischen Stabilisatoren, Gleitmitteln, Entschäumern, kettenverlängernden Additiven, optischen Aufhellern welche im UV-Bereich absorbieren, Weichmachern, Haftvermittlern, halogenhaltigen Flammschutzmitteln, halogenfreien Flammschutzmitteln, Partikeln, Füll- und Verstärkungsstoffen, letztere z.B. in Faserform, oder einer Kombination solcher Additive.

Als Beispiel für UV-absorbierende Additive seien anorganische Pigmente oder HALS (Hindered Amine Light Stabilizers) genannt, die als UV-Stabilisatoren fungieren. Nicht limitierende Beispiele für diese UV-absorbierenden Stoffe sind Benzophenon, Benzotriazol, Oxalanilide, Phenyltriazine und Tetramethylpiperidin-Derivate.

Diese Additive können in bis zu 2 Gewichtsprozenten, vorzugsweise bis zu 0.5 bezogen auf 100 Gewichtsprozent der thermoplastischen Formmasse, enthalten sein. Ist das Matrixmaterial als Additiv zusätzlich mit Glasfasern verstärkt, so können dann auch höhere Anteile enthalten sein, So können dann bevorzugt bis zu 50 Gewichtsprozent Glasfasern, oder bis zu 30 Gewichtsprozent oder bis zu 10 Gewichtsprozent zugesetzt werden. Die Glasfasern können dabei runden Querschnitt oder aber auch flachen Querschnitt aufweisen, z.B. mit einem Verhältnis der Achsenlängen im Bereich von 2-10, vorzugsweise von 3-5. Ist das Matrixmaterial als Additiv zusätzlich hinsichtlich der Schlagzähigkeit modifiziert, so können dann auch höhere Anteile enthalten sein, So können dann bevorzugt bis zu 30 Gewichtsprozent Schlagzähverbesserer, oder bis zu 20 Gewichtsprozent oder bis zu 10 Gewichtsprozent zugesetzt werden.

Ausserdem können als weitere Additive bis zu 2 Gewichtsprozent, bevorzugt bis zu 1.2 Gewichtsprozent nicht im NIR absorbierender Farbstoffe zugesetzt werden.

Die Herstellung der Bauteile kann beispielsweise unter Verwendung einer Polymerisation gemäss der EP 0 725 101 erfolgen, es können Mischungen (Blends) von unterschiedlichen Polymeren eingesetzt werden, die Bauteile können durch Extrusion bzw. Spritzguss erhalten werden. Die Herstellung der erfindungsgemäß eingesetzten Polyamidformmassen kann auf üblichen Compoundiermaschinen, wie z. B. ein- oder zweiwelligen Extrudern oder Schneckenknetern erfolgen. In der Regel wird zunächst der polymere Anteil aufgeschmolzen und das Pigment an beliebigen Stellen des Extruders, z. B. mittels eines Sidefeeders, in die Schmelze eingetragen. Die Compoundierung erfolgt bevorzugt bei eingestellten Zylindertemperaturen von 230°C bis 320°C. Der polymere Anteil und das Pigment können aber auch alle in den Einzug dosiert werden.

Während beim Bauteil (B) die Dicke nicht derart wesentlich ist, so ist diese beim Bauteil (A) typischerweise im Bereich von weniger als 10 mm oder bevorzugt weniger als 5 mm, bei der Variante, bei welcher das Bauteil (A) eine Weisspigmentierung aufweist, ist die Dicke vorzugsweise höchstens 1 mm.

Typischerweise beträgt die Schweißfestigkeit (im Sinne einer Scherfestigkeit) bei Verwendung des eingesetzten Verfahrens wenigstens 5 N/mm2, vorzugsweise wenigstens 10 N/mm2, oder wenigstens 15 N/mm2, und insbesondere vorzugsweise wenigstens 20 N/mm2. Diese Werte werden dabei gemessen wie weiter unten im Rahmen der experimentellen Versuche beschrieben.

Die Gegenstände der vorliegenden Erfindung können beispielsweise Bauteile für tragbare elektrische Geräte wie Ohrhörer, Mobiltelefone und Schlüssel oder Gegenstände, die in der Medizintechnik eingesetzt werden, sein. Entsprechend betrifft die vorliegende Erfindung auch Bauteile, insbesondere Bauteile aus dem Bereich der tragbaren elektronischen Geräte, insbesondere Gehäuse für ein Bauteil ausgewählt aus der folgenden Gruppe: Ohrhörer, Kopfhörer, Hörgerät, Mobiltelefon, Smartphone, tragbare Computer, Tablet-Computer, Autoschlüssel, mit wenigstens einer Schweißverbindung hergestellt nach dem Verfahren wie oben beschrieben.

Die Gegenstände der vorliegenden Erfindung können auch mit einem Konnektor versehene Schläuche oder Teile einer Kaffeemaschine mit wenigstens einer Schweissverbindung nach dem Verfahren wie oben beschrieben sein.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische perspektivische Darstellung des Laserschweissprozesses; und
- Fig. 2: Schnittdarstellungen senkrecht zur Schweissnaht für verschiedene Bauteilformen: a) flächiger Kontaktbereich; b) Rippenkontakt durch Bauteil A; c) Rippenkontakt bei beiden Bauteilen.

### BESCHREIBUNG BEVORZUGTER AUSFÜHRUNGSFORMEN

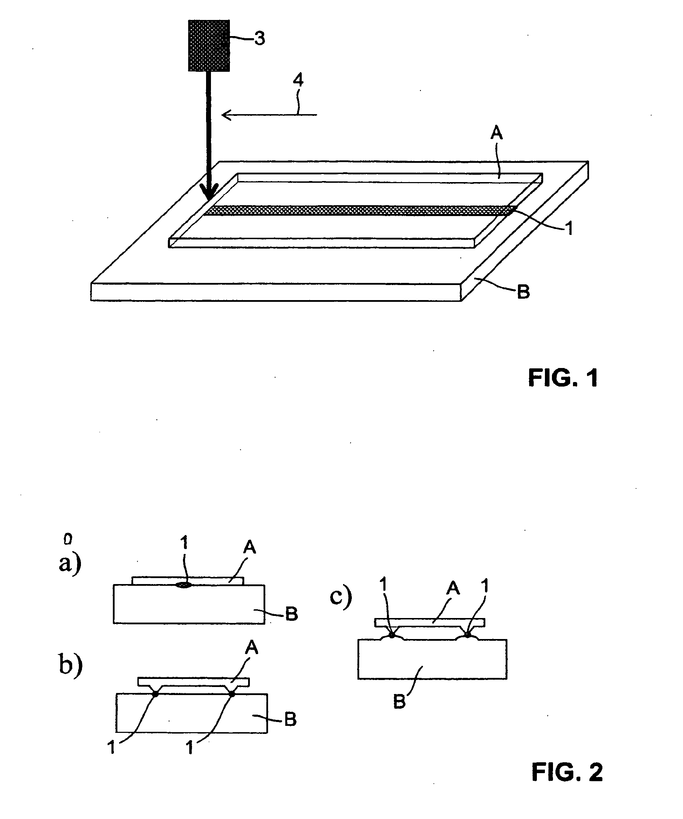

Anhand spezifischer Schweißversuche soll durch den folgenden experimentellen Teil dokumentiert werden, wie das Schweißverfahren durchgeführt werden kann und welche mechanischen Eigenschaften durch die Schweissnaht gewährleistet werden können. Grundsätzlich wird bei einem derartigen Verfahren, wie dies schematisch in einer perspektivischen Darstellung in Figur 1 dargestellt ist, ein gewissermassen unten liegendes, dem Laserstrahl abgewandtes Bauteil B vorgelegt und darauf in flächigem Kontakt ein weiteres Bauteil A. Ein Laser 3 gibt einen auf die Kontaktebene der beiden Bauteile fokussierten Laserstrahl 2 ab und fährt mit einer Vorschubrichtung 4 entlang der gewünschten Schweissnaht 1.

Dabei können die Kontaktbereiche zwischen den Bauteilen unterschiedlich gestaltet sein, wie dies in Figur 2 jeweils in Schnittdarstellungen senkrecht zur Schweissnaht 1 dargestellt ist. Figur 2a zeigt dabei die Situation einer flächigen Kontaktierung der beiden Bauteile, wie dies auch in Figur 1 dargestellt ist. In Figur 2b ist dargestellt, dass beispielsweise beim Bauteil A Rippen ausgebildet sein können, welche den Kontakt mit einer Fläche des Bauteils B bilden. Auch hier kann entsprechend eine Schweissnaht 1 ausgebildet werden, vorausgesetzt die Weglänge des Lasers durch das Material des Bauteils A ist innerhalb der oben angegebenen Bereichsgrenzen. In Figur 2c ist eine Situation dargestellt, wo beide Bauteile Rippen aufweisen, welche korrespondierend verlaufen, auch in diesem Fall ist es möglich, bei einer ebenfalls gewissermassen linienförmigen Kontaktierung, die Schweissnaht 1 entlang dieser Linie auszubilden.

In diesen Figuren ist jeweils eine linienförmige Schweissnaht dargestellt, es kann sich dabei um eine Gerade oder um eine im Prinzip beliebige Form handeln. Diese Form kann realisiert werden, indem entweder der Laser respektive der Laserstrahl entlang dieser Form geführt wird, oder indem der Strahl stationär gehalten wird und die Bauteile entsprechend bewegt werden. Ebenfalls möglich sind Punktschweissungen, wobei diese auch beispielsweise durch einen entsprechend gepulsten Laser realisiert werden können.

### Experimenteller Teil

| | |
|---|---|
| M12: | Grilamid TR^{®} 90 ist ein amorphes transparentes Polyamid des Typs MACM12, mit einer Lichttransmission von 93 und einem Haze <1, erhältlich von EMS-CHEMIE AG |
| P12: | P12 ist ein teilkristallines Polyamid des Typs PA12, erhältlich von EMS-CHEMIE AG |
| LV3H: | Grilamid ® LV-3H ist ein mit 30 Gew.% glasfaserverstärktes |
| | teilkristallines Polyamid des Typs PA12, erhältlich von der EMS-CHEMIE AG |
| CX: | Trogamid® CX7323 ist ein amorphes Polyamid des Typs PACM12 mit einer Lichttransmission von 93 und einem Haze <1 %, erhältlich von Evonik Degussa |
| PMMA: | Plexiglas^{®} Resist zk40 ist ein Polymethylmethacrylat (PMMA) mit einer Lichttransmission von 90, erhältlich von Evonik Röhm GmbH |
| PC: | Makrolon^{®} 2858 ist ein Polycarbonat (PC) mit einer Lichttransmission von 89, erhältlich von Bayer AG |
| Ti-Pure ® R103 | ist ein Weisspigment aus TiO₂ in seiner Rutilform erhältlich von DUPONT™, es weist eine mittlere Partikelgröße von 23 Mikrometer auf (median particle size). |
| Kronos® 2220 | ist ein Weisspigment aus TiO₂ in seiner Rutil-Form erhältlich von Kronos®, seine Oberfläche ist mit Aluminium-, und Siliciumverbindungen sowie einer Siliconverbindung stabilisiert. |
| Sachtolith HDS | ist ein Weisspigment aus Zinksulfid erhältlich von Sachtleben Chemie GmbH. |

Die für die Schweissversuche verwendeten 0.5, 0.75 und 1 mm dicken Platten mit den weiteren Dimensionen 4 x 5 cm wurden aus diesen Materialien auf einer vollelektrischen Spritzgussmaschine der Firma Arburg (Gerätebezeichnung: ARBURG Allrounder 320 A 500-170) mit temperiertem Werkzeug gespritzt. Die folgenden Spritzgussparameter wurden verwendet:
a) Für M12:
   Werkzeug 80°C, Massetemperatur 280°C
b) Für PC:
   Werkzeug 80°C, Massetemperatur 300°C
c) Für PMMA:
   Werkzeug 40°C, Massetemperatur 260°C
d) Für CX
   Werkzeug 80°C, Massetemperatur 280°C
e) Für P 12
   Werkzeug 60°C, Massetemperatur 250°C
f) Für LV3H
   Werkzeug 60°C, Massetemperatur 260°C

Die Bauteile (A) und (B) wurden für die Schweissversuche auf eine Länge von 50 mm und eine Breite von ca. 12 mm zugeschnitten. Die Bauteile (A) und (B) wurden trocken verschweisst.

Für die Schweissversuche wurden die folgenden Diodenlaser der DILAS Diodenlaser GmbH verwendet:
a) Wellenlänge: 1940 nm, COMPACT Diode Laser System 18/600 (16 W, 600 µm)
b) Wellenlänge: 1470 nm, MINI Diode Laser System 40/400 (40 W, 400 µm)
c) Wellenlänge 980 nm, COMPACT Diode Laser System 500/400 (500W, 400 µm)

### Durchführung der Schweissversuche:

Die über einem Trockenmittel gelagerten Bauteile (A) und (B) wurden überlappend auf einer Platte aufeinandergelegt. Durch Ansteuern eines Pneumatikkolbens wurde diese Platte an eine darüber fixierte PMMA-Platte gedrückt, wodurch der Anpressdruck aufgebaut wurde. Der Laserstrahl wurde durch eine Aussparung in der PMMA-Platte direkt auf Bauteil A geführt und durch dieses hindurch zur Schweissnaht. Der Strahlengang respektive der Vorschub des Lasers wurde bei allen Wellenlängen manuell so eingestellt, dass er die komplette Breite von Bauteil A durchläuft. Die Streckenenergie der Strahlung wird über den Vorschub geregelt und wurde den zu verschweissenden Bauteilen entsprechend gewählt. Abhängig von der chemischen Zusammensetzung, Dicke und Pigmentgehalt sollte die Streckenenergie spezifisch eingestellt werden, um ein Verbrennen an der Oberfläche zu vermeiden. Ein Schweissversuch wurde in den Tabellen 2 und 3 mit "-" bewertet, wenn entweder keine Verbindung zwischen Bauteil A und B erzielt wurde oder das Bauteil A verbrannte Bereiche, Löcher oder Blasen aufwies. Eine Bewertung des Schweissversuchs mit (+) erfolgte, wenn die visuelle Beurteilung keine verbrannte Bereiche oder sonstige Schäden an der Oberfläche ergab.

Die CIE L*a*b*-Werte wurden auf einem Spectrophotometer der Firma Datacolor (Gerätebezeichnung: Datacolor 650) unter den folgenden Messbedingungen vor einem weisslackierten Kontrastblech bestimmt, Messmodus: Reflexion, Messgeometrie: D/8°, Lichtart: D 65 10, Glanz: eingeschlossen, Kalibrierung: UV-kalibriert, Messblende: SAV. Die erhaltenen L*a*b*-Werte sind in den Tabellen 1 bis 3 wiedergegeben. Die Verbundfestigkeit (Schweissfestigkeit) der Schweissnaht wurde nach ISO 527 mit einer Zuggeschwindigkeit von 5 mm/min bei einer Temperatur von 23°C bestimmt. Die überlappend geschweissten Gegenstände bestehend aus den Bauteilen (A) und (B) wurden in trockenem Zustand in die Zugmaschine geklemmt und eine Kraft parallel zur Plattenebene angelegt. Die individuelle Dicke der Bauteile kann den Tabellen 1 bis 3 entnommen werden.

**Tabelle 1: Schweissversuche mit Formteilen aus MACM 12 und Ti-Pure® R103 als Weisspignent.**

| | VB1 | VB2 | B1 | B2 | B3 | B4 | B5 | B6 | VB3 | VB4 | B7 |
|---|---|---|---|---|---|---|---|---|---|---|---|
| Material | M12 | M12 | M12 | M12 | M12 | M12 | M12 | M12 | M12 | M12 | M12 |
| Bauteil A TiO₂ [%] | 0 | 0 | 0 | 0 | 0 | 0 | 0 | 0 | 0 | 2.6 | 1.3 |
| Bauteil B TiO₂ [%] | 0 | 0^{a} | 1.3 | 1.3 | 5.2 | 5.2 | 5.2 | 5.2 | 5.2 | 5.2 | 5.2 |
| Dicke Bauteil A [mm] | 1 | 1 | 1 | 1 | 0.5 | 0.5 | 1 | 1 | 1 | 0.5 | 0.5 |
| Dicke Bauteil B [mm] | 1 | 1 | 1 | 1 | 0.75 | 0.75 | 1 | 1 | 1 | 0.75 | 0.75 |
| Laserwellenlänge [nm] | 1940 | 1940 | 1470 | 1940 | 1470 | 1940 | 1940 | 1470 | 980 | 1940 | 1940 |
| Streckenenergie [J/mm] | 0.001 | 0.001 | 0.005 | 0.002 | 0.005 | 0.001 | 0.002 | 0.005 | 0.001 | 0.0009 | 0.001 |
| Anpressdruck [bar] | 4 | 4 | 4 | 4 | 4 | 4 | 4 | 4 | 4 | 4 | 4 |
| Schweissqualität | + | + | + | + | + | + | + | + | - | - | + |
| Schweissfestigkeit [N/mm²] | n.b. | n.b. | 30.95 | 28.97 | 15.87 | 11.46 | n.b. | n.b. | - | - | 11.90 |
| L*-Wert Bauteil A | n.b. | n.b. | n.b. | n.b. | n.b. | n.b. | n.b. | n.b. | n.b. | 95 | 95 |
| a*-Wert Bauteil A | n.b. | n.b. | n.b. | n.b. | n.b. | n.b. | n.b. | n.b. | n.b. | -0.32 | -0.64 |
| b*-Wert Bauteil A | n.b. | n.b. | n.b. | n.b. | n.b. | n.b. | n.b. | n.b. | n.b. | -0.18 | 0.58 |
| L*-Wert Bauteil B | n.b. | n.b. | 96 | 96 | 96 | 96 | 96 | 96 | 96 | 96 | 96 |
| a*-Wert Bauteil B | n.b. | n.b. | -0.52 | -0.52 | -0.35 | -0.35 | -0.14 | -0.14 | -0.14 | -0.35 | -0.35 |
| b*-Wert Bauteil B | n.b. | n.b. | 0.90 | 0.90 | 0.00 | 0.00 | 0.33 | 0.33 | 0.33 | 0.00 | 0.00 |

| | | | | | | | | | | | |
|---|---|---|---|---|---|---|---|---|---|---|---|
| a) 50 % glasfaserverstärkt., n.b.: nicht bestimmt. | | | | | | | | | | | |

**Tabelle 2: Schweissversuche mit Formteilen aus MACM 12 und anderen Weisspigmenten.**

| | B8 | B9 |
|---|---|---|
| Material | M12 | M12 |
| Bauteil A Weisspigment [%] | 1.3 | 1.3 |
| Bauteil B Weisspigment [%] | 5.2 | 5.2 |
| Weisspigment Bauteil A | Kronos 2220 | Sachtolith HD-S |
| Weisspigment Bauteil B | Ti-Pure® R103 | Ti-Pure® R103 |
| Dicke Bauteil A [mm] | 0.5 | 0.5 |
| Dicke Bauteil B [mm] | 0.75 | 0.75 |
| Laserwellenlänge [nm] | 1940 | 1940 |
| Streckenenergie [J/mm] | 0.0012 | 0.0013 |
| Anpressdruck [bar] | 4 | 4 |
| Schweissqualität | + | + |
| Schweissfestigkeit [N/mm²] | 15.43 | 9.26 |
| L*-Wert Bauteil A | 95 | 96 |
| a*-Wert Bauteil A | -0.07 | 0.02 |
| b*-Wert Bauteil A | -0.41 | -0.77 |
| L*-Wert Bauteil B | 96 | 96 |
| a*-Wert Bauteil B | -0.35 | -0.35 |
| b*-Wert Bauteil B | 0.00 | 0.00 |

**Tabelle 3: Schweissversuche mit anderen Materialien als MACM12 und Ti-Pure® R103 als Weisspigment.**

| | B10 | B11 | B12 | B13 | B14 | B15 | B16 | B17 |
|---|---|---|---|---|---|---|---|---|
| Material | PC | PC | PMMA | P12^{b} | P12^{b} | P12^{b} | LV-3H^{a} | CX |
| Bauteil A TiO₂ [%] | 0 | 0.5 | 0 | 0 | 0 | 0 | 0 | 0 |
| Bauteil B TiO₂ [%] | 1.3 | 1.3 | 1.3 | 0 | 0 | 0 | 0 | 5.2 |
| Dicke Bauteil A [mm] | 1 | 1 | 1 | 0.5 | 0.75 | 0.5 | 0.5 | 1 |
| Dicke Bauteil B [mm] | 1 | 1 | 1 | 0.75 | 0.75 | 0.75 | 0.75 | 1 |
| Laserwellenlänge [nm] | 1470 | 1940 | 1470 | 1470 | 1470 | 1940 | 1940 | 1940 |
| Streckenenergie [J/mm] | 0.001 | 0.005 | 0.008 | 0.006 | 0.008 | 0.018 | 0.002 | 0.002 |
| Anpressdruck [bar] | 4 | 4 | 4 | 4 | 4 | 4 | 4 | 4 |
| Schweissqualität | + | + | + | + | + | + | + | + |
| Schweissstärke [N/mm²] | 34.52 | 34.52 | 17.46 | 11.90 | 19.40 | 14.11 | 22.93 | 33.73 |
| L*-Wert Bauteil A | n.b. | 92 | n.b. | n.b. | n.b. | n.b. | n.b. | n.b. |
| a*-Wert Bauteil A | n.b. | -1.03 | n.b. | n.b. | n.b. | n.b | n.b. | n.b. |
| b*-Wert Bauteil A | n.b. | 1.02 | n.b. | n.b. | n.b. | n.b. | n.b. | n.b. |
| L*-Wert Bauteil B | 94 | 94 | 95 | n.b. | n.b. | n.b. | n.b. | 96 |
| a*-Wert Bauteil B | -0.79 | -0.79 | -0.81 | n.b. | n.b. | n.b | n.b. | -0.52 |
| b*-Wert Bauteil B | 0.63 | 0.63 | 2.16 | n.b. | n.b. | n.b. | n.b. | -0.90 |

| | | | | | | | | |
|---|---|---|---|---|---|---|---|---|
| a) 50 % glasfaserverstärkt, b) teilkristallin, n.b.: nicht bestimmt. | | | | | | | | |

### BEZUGSZEICHENLISTE

| | | | |
|---|---|---|---|
| 1 | Schweissnaht | 4 | Vorschub Laser |
| 2 | Laserstrahl | A | zugewandtes Bauteil |
| 3 | Laser | B | abgewandtes Bauteil |

## Patentansprüche

1. Verfahren zum Laser-Verschweißen von zwei wenigstens im Verbindungsbereich in Kontakt gebrachten Kunststoffbauteilen (A,B),
wobei das der Lasereinstrahlung abgewandte Bauteil (B) aus einer Kunststoffmatrix mit einer Weisspigmentierung von wenigstens 0.5 Gewichtsprozent und höchstens 20 Gewichtsprozent besteht, und
wobei das der Lasereinstrahlung zugewandte Bauteil (A), durch welches beim Verschweißen der Laserstrahl hindurchtritt, eine Kunststoffmatrix mit einer Weisspigmentierung aufweist,
wobei für das Verschweißen eine Laserwellenlänge im Bereich von 1200 - 2200 nm eingesetzt wird,
wobei
bei einer Weisspigmentierung des der Laserstrahlung zugewandten Bauteils (A) ausgedrückt in Gewichtsprozent das Produkt aus Weglänge (1) des Laserstrahls durch das der Laserstrahlung zugewandte Bauteil (A) in mm und Weisspigmentierung in Gewichtsprozent kleiner ist als 1.25, und wobei die Weglänge (1) des Laserstrahls durch das der Laserstrahlung zugewandte Bauteil (A) höchstens 1 mm beträgt.

2. Verfahren nach Anspruch 1, **dadurch gekennzeichnet, dass** die Weglänge des Laserstrahls durch das der Laserstrahlung zugewandte Bauteil (A) höchstens 7 mm, vorzugsweise höchstens 5 mm und insbesondere bevorzugt höchstens 3 mm beträgt.

3. Verfahren nach Anspruch 1, **dadurch gekennzeichnet, dass** das der Laserstrahlung zugewandte Bauteil (A) eine Weisspigmentierung aufweist und das Produkt aus Weglänge (1) in mm und Weisspigmentierung in Gewichtsprozent kleiner ist als 1, vorzugsweise im Bereich von 0.2-0.8.

4. Verfahren nach einem der vorhergehenden Ansprüche, **dadurch gekennzeichnet, dass** sowohl das der Laserstrahlung zugewandte Bauteil (A) als auch das der Laserstrahlung abgewandte Bauteil (B) im Wesentlichen frei, vorzugsweise vollständig frei von im NIR-Bereich laserabsorbierenden Additiven sind, die Fügestelle nicht mit einem im NIR-Bereich absorbierenden Additiv vorbehandelt wird und kein weiteres Bauteil welches ein im NIR-Bereich absorbierendes Additiv enthält zwischen das der Laserstrahlung zugewandte Bauteil (A) und das der Laserstrahlung abgewandte Bauteil (B) gebracht wird.

5. Verfahren nach einem der vorhergehenden Ansprüche, **dadurch gekennzeichnet, dass** bei der Führung des Verfahrens der Laserstrahl auf die Fügezone fokussiert ist,
und/oder dass eine Laserleistung im Bereich von 2-500 W, vorzugsweise von 5-200 W eingesetzt wird bei einer Vorschubgeschwindigkeit im Bereich von 100-7000 mm/min, wobei die Streckenenergie im Bereich von 0.0005 J/mm bis 0.05 J/mm, bevorzugt bei 0.0007 bis 0.04 J/mm und besonders bevorzugt von 0.0009 bis 0.01 J/mm liegt.

6. Verfahren nach einem der vorhergehenden Ansprüche, **dadurch gekennzeichnet, dass** während des Prozesses die Bauteile mit einem Anpressdruck im Bereich von 1-10 bar, vorzugsweise im Bereich von 2-5 bar aneinandergepresst werden.

7. Verfahren nach einem der vorhergehenden Ansprüche, **dadurch gekennzeichnet**, das das abgewandte Bauteil (B) eine Weisspigmentierung von wenigstens 1 Gewichtsprozent, oder wenigstens 1.5 Gewichtsprozent, oder wenigstens 3.5 Gewichtsprozent, vorzugsweise von wenigstens 5 Gewichtsprozent und höchstens 15 Gewichtsprozent aufweist.

8. Verfahren nach einem der vorhergehenden Anspruche, **dadurch gekennzeichnet, dass** das zugewandte Bauteil (A) wenn zu einem Formteil mit glatter Oberfläche verarbeitet eine Farbwirkung im CIE LAB-System aufweist, bei welcher L* > 80, vorzugsweise L* > 90, insbesondere vorzugsweise L* > 95 ist und/oder der Betrag von a* respektive unabhängig davon Betrag von b* jeweils < 10, vorzugsweise < 5, insbesondere vorzugsweise < 3 ist und/oder dass das abgewandte Bauteil (B) wenn zu einem Formteil mit glatter Oberfläche verarbeitet eine Farbwirkung im LAB-System aufweist, bei welcher L* >90, vorzugsweise L* > 95 insbesondere vorzugsweise L* > 96 ist.

9. Verfahren nach einem der vorhergehenden Ansprüche, **dadurch gekennzeichnet, dass** wenigstens eines der Bauteile (A, B) auf Basis eines thermoplastischen Polymers ausgewählt aus der folgenden Gruppe aufgebaut ist: Acetalharze; Liquid crystal polymers, Polyacrylate; Polymethacrylate, olefinische Polymere; Polyamide; Polyamidelastomere, insbesondere Polyesteramide, Polyetheramide und Polyetheresteramide, Polyamidimide, Polyarylether, beeinhaltend Polyphenylether; Polycarbonate; Polyetherimide, Polyimide, Polyethersulfone; Polyester; Polyester-Polycarbonate; Polyether; Polyoxyethylene; Polystyrol; Polysulfone; vinylische Polymere wie Polyvinylchlorid und Polyvinylacetat; oder Mischungen aus einem oder mehreren dieser Materialien, wobei die Basis bevorzugtermassen ausgewählt ist aus der Gruppe Polyamid, Polycarbonat, PMMA.

10. Verfahren nach einem der vorhergehenden Ansprüche, **dadurch gekennzeichnet, dass** wenigstens eines der Bauteile (A,B), vorzugsweise beide Bauteile (A, B), auf Basis eines thermoplastischenPolyamids aus aliphatischen beinhaltend cycloaliphatischen Diaminen und aromatischen und/oder aliphatischen Dicarbonsäuren oder aus Lactamen aufgebaut ist, insbesondere bevorzugt aus einem Homo- und Co-Polyamid gebildet aus cycloaliphatischen C6-C17-Diaminen und/oder aliphatischen C4-C12-Diaminen mit aliphatischen C4-C20-Dicarbonsäuren und/oder aromatischen Dicarbonsäuren, insbesondere bevorzugt Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, 1,4 Cyclohexandicarbonsäure Naphthalindicarbonsäuren, Terepthalsäure und Isophtalsäure, insbesondere bevorzugt in Kombination mit einem Diamin ausgewählt aus der Gruppe: Hexamethylendiamin, Heptamethylendiamin, Octamethylendiamin, Nonamethylendiamin, Decamethylendiamin, Undecanmethylendiamin, Dodecamethylendiamin, Trimethylhexamethylendiamin, 2-Methyl-1,5-pentandiamin, Isophorondiamin, Norbomandiamin, 1,3-Bis(aminomethyl)cyclohexan, MACM, MXD PACM,PXD und TMACM.

11. Verfahren nach einem der vorhergehenden Ansprüche, **dadurch gekennzeichnet, dass** die Weisspigmentierung von Bauteil (B) und Bauteil (A) auf Basis wenigstens eines weißen, nicht im NIR absorbierenden Pigments eingestellt wird, vorzugsweise ausgewählt aus der folgenden Gruppe: Aluminiumoxid (Al₂O₃); Bariumsulfat (BaSO₄); Bleicarbonat (PbCO₃); Calciumcarbonat (CaCO₃); Magnesiumcarbonat (MgCO₃); Titandioxid (TiO₂); Titanate wie insbesondere Bariumtitanat (BaTiO₃), Zinkoxid (ZnO); Zinksulfid (ZnS); Glimmer; Kreide; Lithopone; Siliziumdioxid; Silikate wie beispielsweise Aluminiumsilikat oder Natriumsilikat; Talk; metalldotierte oder beschichtete Varianten der genannten Pigmente oder Kombinationen die zumindest eines der genannten Materialien beinhalten, wobei insbesondere bevorzugt Titandioxid, ganz besonders bevorzugt in seiner Rutil-Form, im Wesentlichen oder ausschließlich für die Weisspigmentierung eingesetzt wird.

12. Verfahren nach einem der vorhergehenden Ansprüche, **dadurch gekennzeichnet, dass** die resultierende Schweissnaht eine Schweißfestigkeit von wenigstens 5 N/mm², bevorzugt wenigstens 10 N/mm², insbesondere vorzugsweise wenigstens 15 N/mm², oder wenigstens 20 N/mm² aufweist.

13. Verfahren nach einem der vorhergehenden Ansprüche, **dadurch gekennzeichnet, dass** der verwendete Laser in einem Bereich von 1400 bis 2000 nm, bevorzugt bei 1440 bis 1500 nm besonders bevorzugt bei 1440 bis 1500 nm und bei 1910 bis 1970 nm arbeitet.

14. Verfahren nach einem der vorhergehenden Ansprüche, **dadurch gekennzeichnet, dass** das zugewandte Bauteil (A), durch welches beim Verschweißen der Laserstrahl hindurchtritt, und/oder das abgewandte Bauteil (B), eine transparente Kunststoffmatrix aufweist, wobei vorzugsweise die Matrix im unpigmentierten Zustand eine Lichttransmission von wenigstens 80%, insbesondere bevorzugt wenigstens 90% aufweist, wenn das die Kunststoffmatrix bildende Polymer, bevorzugt (Co)Polyamid, in Form eines Plättchens von 2 mm Dicke vorliegt.

15. Bauteil, insbesondere Bauteil aus dem Bereich der tragbaren elektronischen Geräte, insbesondere Gehäuse für ein Bauteil ausgewählt aus der folgenden Gruppe: Ohrhörer, Kopfhörer, Hörgerät, Mobiltelefon, Smartphone, tragbare Computer, Tablet-Computer Autoschlüssel, mit wenigstens einer Schweißverbindung hergestellt nach dem Verfahren nach einem der vorhergehenden Ansprüche.

## Claims

1. A method for laser welding two plastic components (A, B) brought into contact at least in the joining area,
wherein the component (B) facing away from the laser radiation consists of a plastic matrix with a white pigmentation of at least 0.5 percent by weight, and at most 20 percent by weight, and
wherein the component (A) facing the laser radiation, through which the laser beam passes in the welding process, exhibits a plastic matrix with a white pigmentation,
wherein a laser wavelength ranging from 1200 to 2200 nm is used for welding, wherein given a white pigmentation of the component (A) facing the laser radiation expressed in percent by weight, the product of the travel distance (1) of the laser beam through the component (A) facing the laser radiation in mm and white pigmentation in percent by weight is less than 1.25, and wherein the travel distance (1) of the laser beam through the component (A) facing the laser radiation measures at most 1 mm.

2. The method according to claim 1, **characterized in that** the travel distance of the laser beam through the component (A) facing the laser radiation measures at most 7 mm, preferably at most 5 mm, and especially preferably at most 3 mm.

3. The method according to claim 1, **characterized in that** the component (A) facing the laser radiation exhibits a white pigmentation, and the product of travel distance (1) in mm and white pigmentation in percent by weight is less than 1, preferably ranging from 0.2 to 0.8.

4. The method according to one of the preceding claims, **characterized in that** both the component (A) facing the laser radiation and the component (B) facing away from the laser radiation are essentially free of laser absorbing additives in the NIR range, in particular contain less than 0.0001 percent by weight, and are preferably completely free of laser absorbing additives in the NIR range, the joining site is not pretreated with an additive that absorbs in the NIR range, and no additional component that contains an additive that absorbs in the NIR range is incorporated between the component (A) facing the laser radiation and the component (B) facing away from the laser radiation.

5. The method according to one of the preceding claims, **characterized in that** the laser beam is focused on the joining zone while implementing the method, and/or that a laser power ranging from 2 to 500 W, preferably from 5 to 200 W, is used at a feed rate ranging from 100 to 7000 mm/min, wherein the energy input per unit length ranges from 0.0005 J/mm to 0.05 J/mm, preferably from 0.0007 to 0.04 J/mm, and especially preferably from 0.0009 to 0.01 J/mm.

6. The method according to one of the preceding claims, **characterized in that** the components are pressed against each other during the process at a contact pressure ranging from 1 to 10 bar, preferably ranging from 2 to 5 bar.

7. The method according to one of the preceding claims, **characterized in that** the component (B) facing away from the laser radiation exhibits a white pigmentation of at least 1 percent by weight, or at least 1.5 percent by weight, or at least 3.5 percent by weight, preferably of at least 5 percent by weight, and at most 15 percent by weight.

8. The method according to one of the preceding claims, **characterized in that**, when processed into a molded component with a smooth surface, the component (A) facing the laser radiation exhibits a color effect in the CIE LAB system, at which L* > 80, preferably L* > 90, especially preferably L* > 95, and/or the value of a* or respectively independent value of b* is < 10, preferably < 5, in particular preferably < 3, and/or that, when processed into a molded component with a smooth surface, the component (B) facing away exhibits a color effect in the LAB system, at which L* > 90, preferably L* > 95, and particularly preferably L* > 96.

9. The method according to one of the preceding claims, **characterized in that** at least one of the components (A, B) is structured based on a thermoplastic polymer selected from the following group: Acetal resins; liquid crystal polymers, polyacrylates, polymethacrylates; olefinic polymers; polyamides; polyamide elastomers, in particular polyester amides, polyether amides and polyether ester amides, polyamide imides, polyaryl ether containing polyphenyl ether; polycarbonates; polyetherimides, polyimides, polyethersulfones; polyesters; polyester polycarbonates; polyethers; polyoxyethylenes; polysterene; polysulfones; vinyl polymers such as polyvinyl chloride and polyvinyl acetate; or mixtures of one or more of these materials, wherein the basis is most preferably selected from the group comprised of polyamide, polycarbonate and PMMA.

10. The method according to one of the preceding claims, **characterized in that** at least one of the components (A, B), preferably both components (A, B), are structured based on a thermoplastic polyamide made out of aliphatic, including cycloaliphatic, diamines and aromatic and/or aliphatic dicarbonic acids, or out of lactams, especially preferably made out of homo- and copolyamides formed out of cycloaliphatic C6-C17 diamines and/or aliphatic C4-C12 diamines with aliphatic C4-C20 dicarbonic acids and/or aromatic dicarbonic acids, especially preferably succinic acid, glutaric acid, adipic acid, dodecanoic diacid, brassylic acid, tetradecanoic diacid, pentadecanoic diacid, hexadecanoic diacid, heptadecanoic diacid, octadecanoic diacid, nonadecanoic diacid, 1,4-cyclohexane dicarbonic acid, naphthalene dicarbonic acid, terephthalic acid and isophthalic acid, especially preferably in combination with a diamine selected from the following group: hexamethylenediamine, heptamethylenediamine, octamethylenediamine, nonamethylenediamine, decamethylenediamine, undecamethylenediamine, dodecamethylenediamine, trimethylhexamethylenediamine, 2-methyl-1,5-pentanediamine, isophorone diamine, norbomane diamine, 1,3-bis(aminomethyl)cyclohexane, MACM, MXD, PACM, PXD and TMACM.

11. The method according to one of the preceding claims, **characterized in that** the white pigmentation of component (B) and possibly component (A) is adjusted based on at least one white pigment that does not absorb in NIR, preferably selected from the following group: aluminum oxide (Al₂O₃); barium sulfate (BaSO₄); lead carbonate (PbCO₃); calcium carbonate (CaCO₃); magnesium carbonate (MgCO₃); titanium dioxide (TiO₂); titanates, such as barium titanate (BaTiO₃), zinc oxide (ZnO); zinc sulfide (ZnS); mica; chalk; lithopone; silicon dioxide; silicates, such as aluminum silicate or sodium silicate; talc; metal-doted or coated variants of the mentioned materials or combinations that contain at least one of the mentioned materials, wherein especially preferably titanium dioxide, eminently preferably in its rutile form, is used essentially or exclusively for the white pigmentation.

12. The method according to one of the preceding claims, **characterized in that** the resulting welded seam exhibits a welding strength of at least 5 N/mm², preferably of at least 10 N/mm², especially preferably at least 15 N/mm², or at least 20 N/mm².

13. The method according to one of the preceding claims, **characterized in that** the used laser operates in a wavelength area of 1400 to 2000 nm, preferably at 1440 to 1500 nm, especially preferably at 1440 to 1500 nm, and at 1910 to 1970 nm.

14. The method according to one of the preceding claims, **characterized in that** the facing component (A) through which the laser beam passes in the welding process, and/or the component (B) facing away, exhibit a transparent plastic matrix, wherein the matrix in the unpigmented state preferably exhibits a light transmission of at least 80%, especially preferably of at least 90%, if the polymer forming the plastic matrix, preferably (co)polyamide, is present in the form of a platelet having a thickness of 2 mm.

15. A component, in particular a component from the area of portable electronic devices, in particular housings for a component selected from the following group: earphones, headphones, hearing aids, mobile phones, smart phones, portable computers, tablet computers, automobile keys, with at least one welded joint fabricated using the method according to one of the preceding claims.

## Revendications

1. Procédé pour le soudage laser d'au moins deux composants en plastique (A, B) mis en contact au moins dans la zone de liaison,
le composant (B) tournant le dos au rayonnement laser se composant d'une matrice de matière plastique avec une pigmentation blanche d'au moins 0,5 pour cent en poids et d'un maximum de 20 pour cent en poids, et
le composant (A) orienté vers le rayonnement laser, lequel est traversé par le rayon laser lors du soudage, présentant une matrice de matière plastique avec une pigmentation blanche,
une longueur d'onde de laser dans la plage de 1200-2200 nm étant utilisée pour le soudage,
moyennant quoi
en cas d'une pigmentation blanche du composant (A) orienté vers le rayonnement laser, exprimé en pourcentage en poids, le produit de la longueur de trajet (1) du rayon laser à travers le composant (A) orienté vers le rayonnement laser en nm et de la pigmentation blanche en pourcentage en poids est inférieur à 1,25, et
la longueur de trajet (1) du rayon laser à travers le composant (A) orienté vers le rayonnement laser étant d'un maximum de 1 mm.

2. Procédé selon la revendication 1, **caractérisé en ce que** la longueur de trajet du rayon laser à travers le composant (A) orienté vers le rayonnement laser est d'un maximum de 7 mm, de préférence d'un maximum de 5 mm et de manière particulièrement préférée d'un maximum de 3 mm.

3. Procédé selon la revendication 1, **caractérisé en ce que** le composant (A) orienté vers le rayonnement laser présente une pigmentation blanche et **en ce que** le produit de la longueur de trajet (1) en mm et de la pigmentation blanche en pourcentage en poids est inférieur à 1, de préférence dans la plage de 0,2-0,8.

4. Procédé selon l'une des revendications précédentes, **caractérisé en ce que** le composant (A) orienté vers le rayonnement laser tout comme également le composant (B) tournant le dos au rayonnement laser sont essentiellement exempts, de préférence entièrement exempts d'additifs d'absorption de laser dans la plage NIR, l'emplacement de jonction n'étant pas prétraité avec un additif d'absorption de laser dans la plage NIR et aucun autre composant contenant un additif d'absorption dans la plage NIR n'étant mis en place entre le composant (A) orienté vers le rayonnement laser et le composant (B) tournant le dos au rayonnement laser.

5. Procédé selon l'une des revendications précédentes, **caractérisé en ce que**, lors de l'exécution du procédé, le rayon laser est focalisé sur la zone de jonction,
et/ou **en ce qu'**une puissance laser dans la plage de 2-500 W, de préférence de 5-200 W est utilisée avec une vitesse d'avance dans la plage de 100-7000 mm/min, l'énergie d'extension se situant dans la plage de 0,0005 J/mm à 0,05 J/mm, de préférence dans la plage de 0,0007 à 0,04 J/mm et de manière particulièrement préférée dans la plage de 0,0009 à 0,01 J/mm.

6. Procédé selon l'une des revendications précédentes, **caractérisé en ce que** les composants sont pressés l'un contre l'autre lors du processus avec une pression d'application dans la plage de 1-10 bars, de préférence dans la plage de 2-5 bars.

7. Procédé selon l'une des revendications précédentes, **caractérisé en ce que** le composant (B) tournant le dos présente une pigmentation blanche d'au moins 1 pour cent en poids, ou d'au moins 1,5 pour cent en poids, ou d'au moins 3,5 pour cent en poids, de préférence d'au moins 5 pour cent en poids et d'un maximum de 15 pour cent en poids.

8. Procédé selon l'une des revendications précédentes, **caractérisé en ce que** le composant (A) faisant face, lorsqu'usiné pour donner une pièce moulée à surface lisse, présente un effet de couleur dans le système CIE LAB avec lequel L*>80, de préférence L*>90, en particulier de préférence avec L*>95 et/ou le montant de a* et respectivement de manière indépendante de cela le montant de b* étant respectivement <10, de préférence <5, en particulier de préférence <3 et/ou **en ce que** le composant (B) tournant le dos, lorsqu'usiné pour donner une pièce moulée à surface lisse, présente un effet de couleur dans le système LAB avec lequel L*>90, de préférence L*>95 en particulier de préférence L*>96.

9. Procédé selon l'une des revendications précédentes, **caractérisé en ce qu'**au moins l'un des composants (A, B), de préférence les deux composants (A, B), sont formés sur la base d'un polyamide thermoplastique sélectionné dans le groupe suivant : résines acétales, polymères à cristaux liquides, polyacrylates, polyméthacrylates, polymères oléfiniques, polyamides ; élastomères polyamides, en particulier polyester amides, polyéther amides et polyéther ester amides, polyamidimides, polyarile éther, contenant du poly-phényle-éther ; polycarbonates ; polyethérimides, polyimides, polyéther-sulfones ; polyester ; polyester-polycarbonates ; polyéther ; polyoxyéthylène ; polystyrène ; poly-sulfones ; polymères vinyliques tels que chlorure de polyvinyle et acétate de polyvinyle ; ou des mélanges d'un ou plusieurs de ces matières, la base étant de préférence sélectionnée dans le groupe : polyamide, polycarbonate, PMMA.

10. Procédé selon l'une des revendications précédentes, **caractérisé en ce qu'**au moins l'un des composants (A, B), de préférence les deux composants (A, B) sont formés sur la base d'un polyamide thermoplastique à diamines aliphatiques contenant des cyclo aliphatiques et acides dicarboxyliques aromatiques et/ou aliphatiques ou à lactames, en particulier de préférence à homo et co-polyamide formé par des diamines C6-C17 cyclo aliphatiques et/ou des diamines C4-C12 aliphatiques avec des acides dicarboxyliques C4-C20 aliphatiques et/ou des acides dicarboxyliques aromatiques, en particulier de préférence de l'acide succinique, de l'acide glutarique, de l'acide adipique, de l'acide pimélique, de l'acide subérique, de l'acide azélaïque, de l'acide sébacique, de l'acide undecanédioïque, de l'acide dodécanédioïque, de l'acide brassylique, de l'acide tétradécanédioïque, de l'acide pentadécanédioïque, de l'acide héxadécanédioïque, de l'acide heptadécanédioïque, de l'acide octadécanédioïque, de l'acide nonadécanédioïque, 1,4 d'acide cyclohexandicarboxylique, des acides naphtaline-dicarboxyliques, de l'acide téréphtalique et de l'acide isophtalique, en particulier de préférence en combinaison avec un diamine sélectionné dans le groupe : hexaméthylène diamine, heptaméthylène diamine, octaméthylène diamine, nonaméthylène diamine, décaméthylène diamine, undécanéméthylène diamine, dodécaméthylène diamine, triméthylehexaméthylène diamine, 2-méthyle-1,5-pentadiamine, isophorone diamine, norbornane diamine, 1,3-bis(aminométhyle)cyclohéxane, MACM, MXD PACM, PXD et TMACM.

11. Procédé selon l'une des revendications précédentes, **caractérisé en ce que** la pigmentation blanche du composant (B) et du composant (A) est réglée sur la base d'au moins un pigment blanc non absorbant dans le NIR, de préférence sélectionné dans le groupe suivant : oxyde d'aluminium (Al₂O₃) ; sulfate de baryum (BaSO₄) ; céruse (PbCO₃) ; carbonate de calcium (CaCO₃) ; carbonate de magnésium (MgCO₃) ; dioxyde de titane (TiO₂) ; des titanates tels en particulier du titanate de baryum (BaTiO₃), de l'oxyde de zinc (ZnO) ; sulfure de zinc (ZnS) ; mica ; craie ; lithopone ; dioxyde de silicium ; des silicates tels par exemple du silicate d'aluminium ou du silicate de sodium ; du talc ; des variantes des pigments mentionnés dopées au métal ou revêtues ou des combinaisons contenant au moins l'une des matières citées, moyennant quoi l'on utilise en particulier de préférence du dioxyde de titane, de manière particulièrement préférée dans sa forme rutile, essentiellement ou exclusivement pour la pigmentation blanche.

12. Procédé selon l'une des revendications précédentes, **caractérisé en ce que** le cordon de soudure résultant présente une résistance de soudure d'au moins 5 N/mm², de préférence d'au moins 10 N/mm², en particulier de préférence d'au moins 15 N/mm², ou bien d'au moins 20 N/mm².

13. Procédé selon l'une des revendications précédentes, **caractérisé en ce que** le laser utilisé travaille dans une plage de 1400 à 2000 nm, de préférence de 1440 à 1500 nm, de manière particulièrement préférée de 1440 à 1500 nm et de 1910 à 1970 nm.

14. Procédé selon l'une des revendications précédentes, **caractérisé en ce que** le composant (A) faisant face, à travers lequel passe le rayon laser lors du soudage, et/ou le composant (B) tournant le dos, présente une matrice de matière plastique, la matrice présentant de préférence à l'état non pigmenté une transmission de lumière d'au moins 80%, en particulier de préférence d'au moins 90%, lorsque le polymère formant la matrice de matière plastique, de préférence du (co) polyamide, se présente sous la forme d'une plaquette d'une épaisseur de 2 mm.

15. Composant, en particulier composant dans le domaine des appareils électroniques portables, en particulier boîtier pour un composant sélectionné dans le groupe suivant : écouteur, casque d'écoute, appareil auditif, téléphone portable, smartphone, ordinateur portable, ordinateur-tablette, clés de voiture, avec au moins une liaison soudée fabriquée selon le procédé selon l'une des revendications précédentes.
